# FASCICULE DE BREVET EUROPEEN

(11) **EP 2 794 314 B1**
(45) Date de publication et mention de la délivrance du brevet: **31.10.2018**
(21) Numéro de dépôt: 12812568.9
(22) Date de dépôt: 17.12.2012
(51) Int. Cl.: B60H 1/00

(54) **CAISSON D'UNE UNITÉ DE CHAUFFAGE, VENTILATION ET/OU CLIMATISATION**
GEHÄUSE FÜR EINE HEIZUNGS-, BELÜFTUNGS-UND/ODER KLIMAANLAGE
HOUSING FOR A HEATING, VENTILATION AND/OR AIR-CONDITIONING UNIT

(30) Priorité: 23.12.2011 FR 1104052
(43) Date de publication de la demande: 29.10.2014
(60) Demande divisionnaire: 15154031.7
(73) Titulaire: Valeo Systemes Thermiques, 78320 Le Mesnil Saint Denis (FR)
(72) Inventeur: PIERRES, Philippe, F-78990 Elancourt (FR); LISKA, Jan, CP26944 Rakovnik (CZ)
(74) Mandataire: Metz, Gaëlle
(86) Numéro de dépôt international: PCT/EP2012/075692
(87) Numéro de publication internationale: WO 2013/092451

(56) Documents cités:
- EP-A2- 0 423 778
- DE-A1- 3 805 168
- FR-A1- 2 866 270

## Description

La présente invention concerne le domaine de la ventilation et/ou du conditionnement de l'air de l'habitacle d'un véhicule. L'invention se rapporte plus particulièrement des caissons mis en oeuvre pour canaliser l'air pendant son conditionnement, avant son injection dans l'habitacle et éventuellement lors de son recyclage. FR 2 866 270 A1 divulgue un tel caisson.

Dans le domaine ci-dessus, il est connu de mettre en oeuvre un système comprenant une turbine qui aspire de l'air pour l'insuffler dans une unité de ventilation, chauffage et/ou climatisation à partir de laquelle l'air conditionné est dirigé vers l'intérieur de l'habitacle.

L'unité de ventilation, chauffage et/ou climatisation comprend généralement un caisson délimitant au moins une chambre d'aspiration dont la paroi périphérique forme une volute et qui est destinée à recevoir une turbine d'un groupe moto-ventilateur.

Le caisson délimite aussi une chambre de répartition raccordée à une sortie de la chambre d'aspiration ainsi que des canaux de distribution raccordés à une sortie de la chambre de répartition.

Les canaux de distribution sont par ailleurs raccordés classiquement à des canaux de sortie qui permettent de diriger le flux d'air dans différentes zones de l'habitacle comme par exemple vers le pare-brise, vers une partie haute de l'habitacle ou encore vers les côtés ou vers le bas de l'habitacle.

Le caisson de l'unité de ventilation, chauffage et/ou climatisation comprend des volets permettant d'obturer sélectivement l'un ou l'autre des canaux de sortie de manière à privilégier des zones de ventilation comme cela est par exemple le cas lorsqu'il convient de désembuer le pare-brise.

Ainsi il est connu d'utiliser un volet de type papillon qui permet de commander simultanément deux canaux de sortie voisins de manière à ce que lorsqu'un canal de sortie est fermé l'autre est ouvert et inversement, tandis que dans une position intermédiaire du volet les deux canaux voisins sont ouverts. Un tel volet comprend généralement un arbre longitudinal qui s'étend en travers des deux canaux de sortie et qui porte un volet plan pour chaque canal de sortie. Les deux volets s'étendent radialement par rapport à l'arbre qui les porte en étant placés perpendiculairement l'un à l'autre. Un tel volet de type papillon donne pleinement satisfaction en ce qui concerne le contrôle de l'ouverture de canaux de sortie qui sont disposés les uns à côté des autres selon une direction parallèle à l'axe de rotation du volet.

Toutefois, la disposition voisine des canaux de sortie dont l'ouverture peut être contrôlée par un volet de type papillon n'est pas toujours compatible avec les contraintes d'encombrement du caisson de ventilation. Il est donc apparu le besoin d'un nouveau type de caisson et de volet qui permette d'adopter une autre disposition pour les canaux de sortie tout en conservant les possibilités d'ouvertures sélectives de ces derniers.

Afin d'atteindre cet objectif l'invention concerne un caisson de ventilation comprenant :
- un canal de distribution raccordé à un premier canal de sortie et à un deuxième canal de sortie par une zone de répartition en Y,
- et un volet commandé qui pivote à l'intérieur de la zone de répartition selon un axe de rotation situé sensiblement à l'intersection des canaux de sortie et qui comprend une première aile et une deuxième aile sensiblement parallèles à l'axe de rotation et décalées radialement par rapport à l'axe de rotation en étant distantes l'une de l'autre pour définir un canal intermédiaire.

Le volet est alors adapté pour que :
- dans une première position, la première aile obture en partie au moins le premier canal de sortie et la deuxième aile se trouve située à l'intérieur de la zone de répartition de sorte que l'air peut circuler, notamment via le canal intermédiaire, entre le canal de distribution et le deuxième canal de sortie,
- dans une deuxième position, la première aile obture en partie au moins le premier canal de sortie et la deuxième aile obture en partie au moins le deuxième canal de sortie,
- dans une troisième position, la deuxième aile obture en partie au moins le deuxième canal sortie et la première aile se trouve située dans la zone de répartition de sorte que l'air peut circuler entre le canal de distribution et le premier canal de sortie.

La conception du volet selon l'invention permet de commander l'ouverture ou la fermeture alternée de deux canaux de sortie qui sont voisins ou superposés ou situés l'un avant l'autre de sorte qu'il est possible d'adopter une configuration du caisson de l'unité de ventilation, chauffage et/ou climatisation plus compacte que celle selon l'art antérieur.

Selon une caractéristique de l'invention, dans la deuxième position, la première aile obture totalement le premier canal de sortie tandis que la deuxième aile obture partiellement le deuxième canal de sortie de manière à autoriser une faible circulation d'air entre le canal de distribution et le deuxième canal de sortie. Cette caractéristique selon la présente invention, permet lorsque le deuxième canal de sortie correspond à une orientation du flux d'air vers le pare-brise de conserver un faible écoulement de l'air en direction de ce dernier de manière à éviter l'apparition de buée en saison froide. De plus, cette configuration évite que l'ensemble des canaux de sortie ne soit fermé simultanément de manière à laisser subsister un flux d'air suffisant pour le renouvellement de l'air de l'habitacle de manière à préserver le confort des passagers notamment.

Selon une autre caractéristique de l'invention, dans la troisième position la deuxième aile obture totalement le deuxième canal de sortie. Cette caractéristique permet de diriger l'intégralité du flux d'air disponible au niveau du canal de distribution vers le premier canal de sortie lorsque que le deuxième est obturé.

Selon encore une autre caractéristique de l'invention, le premier canal de sortie comprend au moins une butée interne d'appui pour la première aile dans la première position. La mise en oeuvre d'une telle butée permet de définir de manière positive la troisième position du volet.

Dans le même sens et selon une caractéristique de l'invention, le deuxième canal de sortie comprend au moins une butée interne d'appui pour la deuxième aile dans la troisième position. Cette butée interne permet de définir de manière positive la première position du volet.

Selon une autre caractéristique de l'invention, le premier canal de sortie comprend, une portion de paroi qui possède une forme cylindrique de révolution coaxiale à l'axe de rotation du volet. Cette configuration de la paroi du premier canal de sortie permet d'éviter les fuites d'air, du canal de distribution vers le premier canal de sortie, lorsque le volet se déplace entre ses première et deuxième positions.

Dans le même esprit et selon encore une autre caractéristique de l'invention, le deuxième canal de sortie comprend une portion de paroi qui possède une forme cylindrique de révolution coaxiale à l'axe de rotation du volet. Cette configuration de la paroi du deuxième canal de sortie permet de contrôler les fuites air, du canal de distribution vers le deuxième canal de sortie lorsque le volet se déplace entre ses deuxième et troisième positions.

Selon une forme de réalisation de l'invention, le volet comprend un arbre longitudinal d'axe Δ portant au moins deux voiles qui s'étendent radialement et qui portent au niveau de deux bords opposés d'une part la première aile et d'autre part la deuxième aile.

Selon une variante de cette forme de réalisation, les deux ailes sont situées de part et d'autre de l'arbre.

Selon une autre variante de cette forme de réalisation, la première aile est plus proche de l'arbre longitudinal que la deuxième aile.

Selon encore une autre variante de cette forme de réalisation l'arbre longitudinal possède une paroi extérieure de forme cylindrique de révolution qui est coaxiale à l'axe Δ et qui est située à proximité immédiate d'un bord du premier canal de sortie dans la zone de répartition. Cette configuration de l'arbre du volet permet de faire obstacle à une circulation importante d'air entre l'arbre du volet et le bord correspondant du premier canal de sortie.

L'invention concerne également un volet pour un caisson d'unité de chauffage, ventilation et/ou climatisation.

Selon l'invention, ce volet comprend un arbre longitudinal d'axe Δ portant au moins deux voiles qui s'étendent radialement et qui portent au niveau de deux bords opposés d'une part première aile d'obturation au moins partielle d'un premier canal de sortie qui est parallèle à l'arbre, et, d'autre part, une deuxième aile d'obturation au moins partielle d'un deuxième canal de sortie qui est parallèle à l'arbre.

Selon une caractéristique de ce volet, les deux ailes sont situées de part et d'autre de l'arbre.

Selon une autre caractéristique de ce volet, la première aile est plus proche de l'arbre longitudinal que la deuxième aile.

Selon encore une autre caractéristique de ce volet l'arbre longitudinal possède une paroi extérieure de forme cylindrique de révolution qui est coaxiale à l'axe Δ.

Bien entendu les différentes caractéristiques, variantes et formes de réalisation de l'invention peuvent être associées les unes avec les autres selon diverses combinaisons dans la mesure où elles ne sont pas incompatibles ou exclusives les unes des autres. Par ailleurs, diverses autres caractéristiques de l'invention ressortent de la description annexée effectuée en référence aux dessins qui illustrent une forme non limitative de réalisation d'un caisson d'une unité de chauffage, ventilation et/ou climatisation et d'un volet conformes à l'invention.
- La figure 1 est perspective schématique d'un caisson de ventilation selon l'invention,
- La figure 2 est perspective schématique partiellement éclatée du caisson illustré à la figure 1,
- La figure 3 est une coupe schématique partielle montrant un détail constructif du caisson illustré figure 1,
- Les figures 4 et 5 sont des perspectives d'un volet selon l'invention mis en oeuvre dans le caisson illustré figures 1 et 2, et,
- Les figures 6 et 7 sont des coupes schématiques partielles du caisson illustré figure 1 montrant deux autres positions du volet illustrées aux figures 2 et 3.

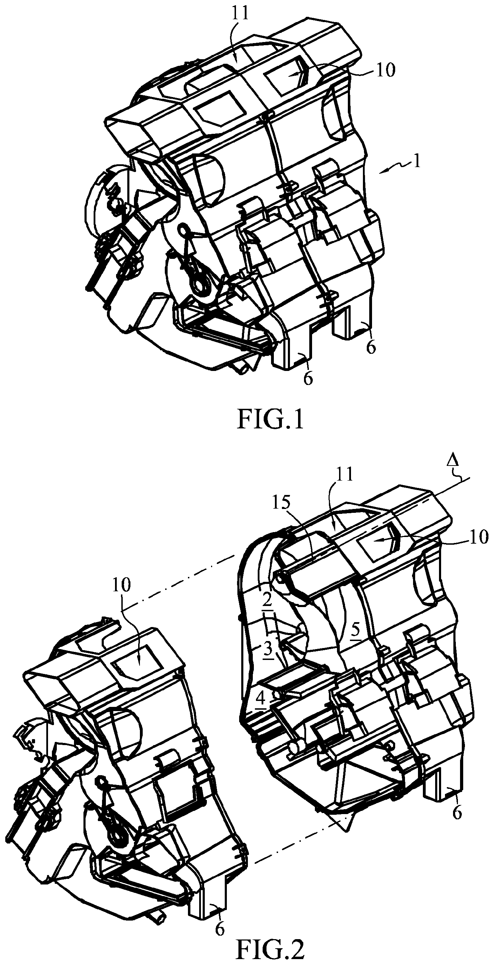

Un caisson d'unité de ventilation, chauffage et/ou climatisation pour habitacle de véhicule selon l'invention, désigné dans son ensemble par la référence 1 aux figures 1 et 2, est destiné à venir se placer entre le compartiment moteur et l'habitacle du véhicule généralement sous le tableau de bord ou la plage avant.

Afin d'occuper un espace aussi limité que possible, le caisson 1 possède une conception compacte et regroupe les principales fonctions nécessaires pour assurer la ventilation, le chauffage ou la climatisation de l'habitacle.

Ainsi, le caisson 1 intègre une chambre d'aspiration 2, qui est destinée à recevoir au moins une turbine centrifuge d'un groupe moto ventilateur. La sortie 3 de la chambre d'aspiration 2 est raccordée à une chambre de répartition 4 elle-même raccordée à des canaux 5 de distribution de l'air pulsé en provenance de la chambre d'aspiration 2. Les canaux de distribution 5 sont alors raccordés par des canaux de sortie 6 à des bouches de ventilations de l'habitacle non représentées.

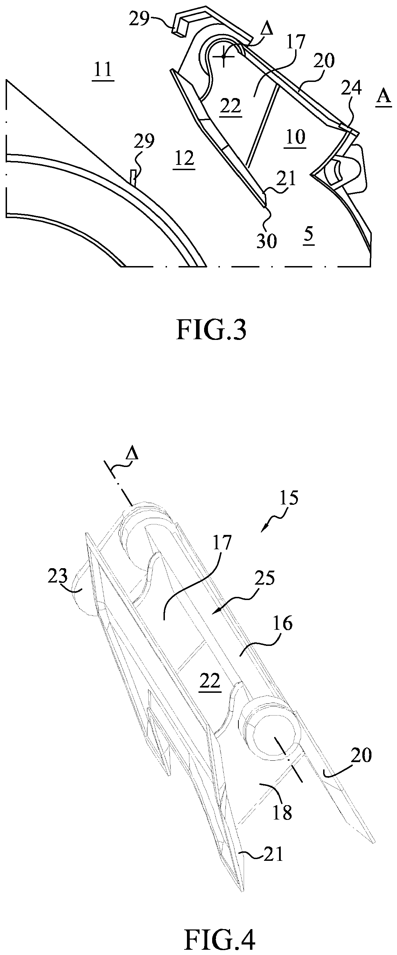

Selon l'exemple illustré, le caisson de ventilation 1 comprend dans sa partie supérieure un premier canal 10 de sortie vers, par exemple, une partie supérieure de l'habitacle et, à l'arrière de ce premier canal 10 de sortie, un deuxième canal 11 de sortie vers, par exemple, le pare-brise du véhicule. Les premier 10 et deuxième 11 canaux de sortie sont raccordés à un même canal de distribution 5 par une zone de répartition 12 en Y comme le montre la figure 3.

Afin de permettre une alimentation sélective de l'un ou l'autre des canaux de sortie 10 et 11, le caisson 1 comprend un volet 15 qui pivote à l'intérieur de la zone de répartition 12 selon un axe de rotation Δ situé sensiblement à l'intersection des canaux de sortie 10 et 11.

Selon la présente invention, le volet 15 comprend un arbre longitudinal 16 parallèle à l'axe Δ. L'arbre 16 porte deux voiles 17 et 18 qui s'étendent radialement à partir de l'arbre 16 en étant sensiblement perpendiculaires à l'axe Δ. Les deux voiles 17 et 18 portent, d'un côté de l'arbre 16, une première aile 20 sensiblement parallèle à l'axe Δ et destinée à obturer en partie au moins le premier canal de sortie 10. Les deux voiles 17 et 18 portent, de l'autre côté de l'arbre 16, une deuxième aile 21 également sensiblement parallèle à l'axe Δ et destinée à obturer en partie au moins le deuxième canal 11. Les deux ailes 20 et 21 sont donc portées par deux côtés opposés de chaque voile 17, 18 et sont distantes l'une de l'autre de manière à définir un canal intermédiaire 22 dont la fonction apparaîtra par la suite.

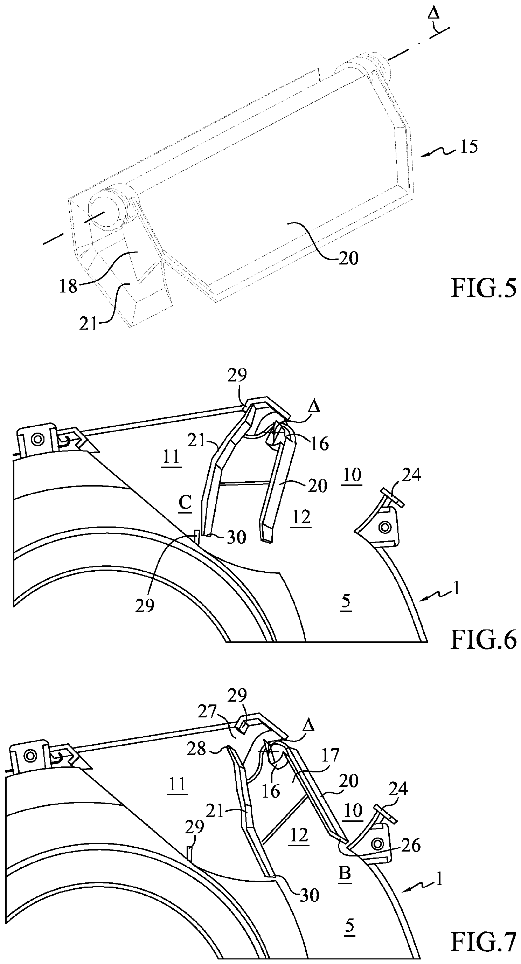

Le volet 15, selon la présente invention, est mobile en rotation, dans la zone de répartition 12, entre une première position A, représentée figure 3, et une troisième position C, illustrée figure 6, en passant par une deuxième position B, montrée figure 7. Le volet 15 est déplacé en rotation par un bras de commande 23 solidaire de l'arbre 16 et reliée à un dispositif de commande non représenté tel qu'un système à câble boden ou à servomoteur. Un tel dispositif de commande est bien connu de l'homme du métier et ne nécessite donc pas une plus ample description.

Selon la présente invention, le volet 15 et ses ailes 20 et 21 sont adaptés pour que dans la première position A la première aile 20 obture en partie au moins le premier canal de sortie 10.

Selon l'exemple illustré à la figure 3, la première aile 10 se trouve, dans la première position A, en appui contre une butée interne 24 périphérique située à l'intérieur du premier canal de sortie 10 de sorte que ce dernier est totalement obturé. Dans cette première position A, la deuxième aile 22 est située à l'intérieur de la zone de répartition de sorte qu'elle n'obture pas le deuxième canal 11 et que l'air peut circuler du canal de distribution 5 vers le deuxième canal de sortie 11 en passant par le canal intermédiaire 22 ainsi qu'entre la deuxième aile 22 et la paroi de la zone de répartition 12.

Selon la présente invention, le volet 15 et ses ailes 20 et 21 sont en outre adaptés pour que dans la deuxième position B, la première aile 20 et la deuxième aile 22 obturent en partie au moins, respectivement, les premier et deuxième canaux de sortie 10 et 11.

Selon l'exemple illustré à la figure 7, afin que le premier canal de sortie 10 soit totalement obturé également dans la deuxième position B, l'arbre 16 possède une paroi extérieure 25 de forme cylindrique de révolution qui est coaxiale à l'axe Δ et qui est située à proximité immédiate d'un bord du premier canal de sortie 10 dans la zone de répartition. De plus, la paroi du premier canal de sortie 10, qui est située du côté d'un bord distal 26 de la première aile 20, possède une forme cylindrique de révolution d'axe Δ de sorte que le bord distal 26 de la première aile 20 en reste au plus près pendant sa rotation entre les première A et deuxième B positions. Ainsi, pendant ce mouvement de la première aile 20, le premier canal de sortie 10 reste totalement obturé aux fuites près.

Dans la deuxième position B, la deuxième aile 21 obture en partie seulement le deuxième canal de sortie 11 de manière à autoriser la circulation d'un faible flux d'air en direction du deuxième canal de sortie 21. À cet effet, la deuxième aile 21, le deuxième canal de sortie 11 et l'arbre 16 sont conformés de manière que ce faible flux d'air s'écoule au travers du canal intermédiaire pour rejoindre le canal de sortie au niveau d'un passage 27 délimité par un bord proximal 28 de la deuxième aile 21 et la paroi du canal de sortie 11. Il sera noté qu'afin d'éviter trop de perte de charge pour ce faible flux d'air la première aile 20 est plus proche de l'arbre 16 que la deuxième aile 21. Selon la présente invention, le volet 15 et ses ailes 20 et 21 sont également adaptés pour que dans la troisième position C, la deuxième aile 21 obture en partie au moins le deuxième canal sortie 11.

Selon l'exemple illustré à la figure 6, la deuxième aile 21 se trouve, dans cette troisième position C, en appui contre une butée périphérique 29 s'étendant à l'intérieur du deuxième canal de sortie 11 de sorte qu'il est complètement obturé par la deuxième aile 21. Il est à noter que selon l'exemple illustré, afin de permettre un bon contrôle du flux d'air dans le deuxième canal de sortie 11, lorsque la deuxième aile 21 se déplace de la deuxième position B à la troisième position C, la partie de la paroi du deuxième canal de sortie 11, située à proximité d'un bord distal 30 de la deuxième aile 21, possède une forme cylindrique de révolution d'axe Δ.

Ainsi, pendant le déplacement de la deuxième aile 21 entre les deuxième B et troisième B positions, la distance entre le bord distal 30 et la paroi en regard du deuxième canal de sortie 11, reste constante.

Par ailleurs, dans la troisième position C du volet 15, la première aile 20 se trouve située dans la zone de répartition 12 en étant complètement dégagée par rapport au premier canal de sortie 10 de sorte que l'air peut circuler librement entre ledit premier canal de sortie 10 et le canal de distribution 5.

Selon l'exemple décrit précédemment, dans la deuxième position B du volet, la deuxième aile 21 n'obture pas complètement le deuxième canal de sortie 11. Toutefois, selon l'invention, la deuxième aile 21 pourrait également être dimensionnée de manière à obturer totalement le deuxième canal de sortie 11 dans la deuxième position B.

De la même manière la première aile 20 pourrait être dimensionnée de manière à ne pas obturer complètement mais seulement partiellement le premier canal de sortie 10 dans cette deuxième position B.

Bien entendu, diverses autres modifications peuvent être apportées au volet et au caisson d'une unité de chauffage, ventilation et/ou climatisation selon l'invention dans le cadre des revendications annexées.

## Revendications

1. Caisson d'une unité de chauffage, ventilation et/ou climatisation comprenant :
- un canal de distribution (5) raccordé à un premier canal de sortie (10) et à un deuxième canal de sortie (11) par une zone de répartition (12) en Y, et
- un volet commandé (15) qui pivote à l'intérieur de la zone de répartition (12) selon un axe de rotation (Δ) situé sensiblement à l'intersection des canaux de sortie (10,11) et qui comprend une première aile (20) et une deuxième aile (21) sensiblement parallèles à l'axe de rotation (Δ) et décalées radialement par rapport à l'axe de rotation (Δ) en étant distantes l'une de l'autre pour définir un canal intermédiaire (22),**caractérisé en ce que** le volet (15) est adapté pour que :
- dans une première position (A), la première aile (20) obture en partie au moins le premier canal de sortie (10) et la deuxième aile (21) se trouve située à l'intérieur de la zone de répartition (12) de sorte que l'air peut circuler, notamment via le canal intermédiaire (22), entre le deuxième canal de sortie (11) et le canal de distribution (5),
- dans une deuxième position (B), la première aile (20) obture en partie au moins le premier canal de sortie (10) et la deuxième aile (21) obture en partie au moins le deuxième canal de sortie (11),
- dans une troisième position (C), la deuxième aile (21) obture en partie au moins le deuxième canal sortie et la première aile (20) se trouve située dans la zone de répartition (12) de sorte que l'air peut circuler entre le premier canal de sortie (10) et le canal de distribution (5).

2. Caisson de ventilation selon la revendication 1, **caractérisé en ce que** dans la deuxième position (B), la première aile (20) obture totalement le premier canal de sortie (10) et la deuxième aile (21) obture partiellement le deuxième canal de sortie (11) de manière à autoriser une faible circulation d'air entre le canal de distribution (5) et le deuxième canal de sortie (11).

3. Caisson de ventilation selon la revendication 1 ou 2, **caractérisé en ce que** dans la troisième position (C) la deuxième aile (21) obture totalement le deuxième canal de sortie (11).

4. Caisson de ventilation selon l'une des revendications 1 à 3, **caractérisé en ce que** le premier canal de sortie (10) comprend au moins une butée interne d'appui pour la première aile (20) dans la première position (A).

5. Caisson de ventilation selon l'une des revendications 1 à 4, **caractérisé en ce que** le deuxième canal de sortie (11) comprend au moins une butée interne d'appui pour la deuxième aile (21) dans la troisième position (C).

6. Caisson de ventilation selon l'une des revendications 1 à 5, **caractérisé en ce que** le premier canal de sortie (10) comprend, une portion de paroi qui possède une forme cylindrique de révolution coaxiale à l'axe de rotation (Δ) du volet (15).

7. Caisson de ventilation selon l'une des revendications 1 à 6, **caractérisé en ce que** le deuxième canal de sortie (11) comprend une portion de paroi qui possède une forme cylindrique de révolution coaxiale à l'axe de rotation (Δ)du volet (15).

8. Caisson de ventilation selon l'une des revendications 1 à 7, **caractérisé en ce que** le volet (15) comprend un arbre (16) longitudinal d'axe Δ portant au moins deux voiles (17,18) qui s'étendent radialement et qui portent au niveau de deux bords opposés, d'une part, la première aile (20) et, d'autre part, la deuxième aile (21).

9. Caisson de ventilation selon la revendication 8, **caractérisé en ce que** les deux ailes (20,21) sont situées de part et d'autre de l'arbre (16).

10. Caisson de ventilation selon la revendication 8 ou 9, caractérisé en que la première aile (20) est plus proche de l'arbre longitudinal que la deuxième aile (21).

11. Caisson de ventilation selon l'une des revendications 8 à 10, **caractérisé en ce que** l'arbre longitudinal possède une paroi extérieure de forme cylindrique de révolution qui est coaxiale à l'axe Δ et qui est situé à proximité immédiate d'un bord du premier canal de sortie (10) dans la zone de répartition (12).

## Patentansprüche

1. Kasten einer Heiz-, Lüftungs- und/oder Klimatisierungseinheit, der Folgendes umfasst:
- einen Zuteilungskanal (5), der mit einem ersten Ausgangskanal (10) und mit einem zweiten Ausgangskanal (11) durch eine Y-förmige Verteilungszone (12) verbunden ist, und
- eine gesteuerte Klappe (15), die im Inneren der Verteilungszone (12) gemäß einer Drehachse (Δ) schwenkt, die im Wesentlichen am Schnittpunkt der Ausgangskanäle (10, 11) liegt, und die einen ersten Flügel (20) und einen zweiten Flügel (21) umfasst, die zur Drehachse (Δ) im Wesentlichen parallel sind und in Bezug auf die Drehachse (Δ) radial versetzt sind, indem sie voneinander entfernt sind, um einen Zwischenkanal (22) zu definieren,
**dadurch gekennzeichnet, dass** die Klappe (15) ausgelegt ist, damit:
- in einer ersten Position (A) der erste Flügel (20) zumindest teilweise den ersten Ausgangskanal (10) verschließt und der zweite Flügel (21) sich im Inneren der Verteilungszone (12) befindet, so dass die Luft insbesondere über den Zwischenkanal (22) zwischen dem zweiten Ausgangskanal (11) und dem Zuteilungskanal (5) zirkulieren kann,
- in einer zweiten Position (B) der erste Flügel (20) zumindest teilweise den ersten Ausgangskanal (10) verschließt und der zweite Flügel (21) zumindest teilweise den zweiten Ausgangskanal (11) verschließt,
- in einer dritten Position (C) der zweite Flügel (21) zumindest teilweise den zweiten Ausgangskanal verschließt und sich der erste Flügel (20) in der Verteilungszone (12) befindet, so dass die Luft zwischen dem ersten Ausgangskanal (10) und dem Zuteilungskanal (5) zirkulieren kann.

2. Lüftungskasten nach Anspruch 1, **dadurch gekennzeichnet, dass** in der zweiten Position (B) der erste Flügel (20) den ersten Ausgangskanal (10) vollständig verschließt und der zweite Flügel (21) den zweiten Ausgangskanal (11) teilweise verschließt, um eine geringe Zirkulation von Luft zwischen dem Zuteilungskanal (5) und dem zweiten Ausgangskanal (11) zu gestatten.

3. Lüftungskasten nach Anspruch 1 oder 2, **dadurch gekennzeichnet, dass** in der dritten Position (C) der zweite Flügel (21) den zweiten Ausgangskanal (11) vollständig verschließt.

4. Lüftungskasten nach einem der Ansprüche 1 bis 3, **dadurch gekennzeichnet, dass** der erste Ausgangskanal (10) mindestens einen inneren Stützanschlag für den ersten Flügel (20) in der ersten Position (A) umfasst.

5. Lüftungskasten nach einem der Ansprüche 1 bis 4, **dadurch gekennzeichnet, dass** der zweite Ausgangskanal (11) mindestens einen inneren Stützanschlag für den zweiten Flügel (21) in der dritten Position (C) umfasst.

6. Lüftungskasten nach einem der Ansprüche 1 bis 5, **dadurch gekennzeichnet, dass** der erste Ausgangskanal (10) einen Wandabschnitt umfasst, der eine rotationssymmetrische Zylinderform besitzt, die zur Drehachse (Δ) der Klappe (15) koaxial ist.

7. Lüftungskasten nach einem der Ansprüche 1 bis 6, **dadurch gekennzeichnet, dass** der zweite Ausgangskanal (11) einen Wandabschnitt umfasst, der eine rotationssymmetrische Zylinderform besitzt, die zur Drehachse (Δ) der Klappe (15) koaxial ist.

8. Lüftungskasten nach einem der Ansprüche 1 bis 7, **dadurch gekennzeichnet, dass** die Klappe (15) eine longitudinale Welle (16) mit der Achse Δ umfasst, die mindestens zwei Abdeckungen (17, 18) trägt, die sich radial erstrecken und die auf der Höhe von zwei entgegengesetzten Rändern einerseits den ersten Flügel (20) und andererseits den zweiten Flügel (21) tragen.

9. Lüftungskasten nach Anspruch 8, **dadurch gekennzeichnet, dass** die zwei Flügel (20, 21) auf beiden Seiten der Welle (16) liegen.

10. Lüftungskasten nach Anspruch 8 oder 9, **dadurch gekennzeichnet, dass** der erste Flügel (20) näher an der longitudinalen Welle liegt als der zweite Flügel (21).

11. Lüftungskasten nach einem der Ansprüche 8 bis 10, **dadurch gekennzeichnet, dass** die longitudinale Welle eine äußere Wand mit rotationssymmetrischer Zylinderform besitzt, die zur Achse Δ koaxial ist und die in der unmittelbaren Nähe eines Randes des ersten Ausgangskanals (10) in der Verteilungszone (12) liegt.

## Claims

1. Casing of a heating, ventilating and/or air-conditioning unit, comprising:
- a distribution channel (5) connected to a first outlet channel (10) and to a second outlet channel (11) by a Y-shaped distributing zone (12), and
- a control flap (15) which pivots within the distributing zone (12) about an axis of rotation (Δ) situated substantially at the intersection of the outlet channels (10, 11) and which comprises a first wing (20) and a second wing (21) that are substantially parallel to the axis of rotation (Δ) and offset radially with respect to the axis of rotation (Δ), being spaced apart from one another so as to define an intermediate channel (22),
**characterized in that** the flap (15) is designed such that:
- in a first position (A), the first wing (20) at least partially closes off the first outlet channel (10) and the second wing (21) is situated inside the distributing zone (12) such that air can flow, notably via the intermediate channel (22), between the second outlet channel (11) and the distribution channel (5),
- in a second position (B), the first wing (20) at least partially closes off the first outlet channel (10) and the second wing (21) at least partially closes off the second outlet channel (11),
- in a third position (C), the second wing (21) at least partially closes off the second outlet channel and the first wing (20) is situated in the distributing zone (12) such that air can flow between the first outlet channel (10) and the distribution channel (5).

2. Ventilation casing according to Claim 1, **characterized in that**, in the second position (B), the first wing (20) completely closes off the first outlet channel (10) and the second wing (21) partially closes off the second outlet channel (11) so as to allow a weak flow of air between the distribution channel (5) and the second outlet channel (11).

3. Ventilation casing according to Claim 1 or 2, **characterized in that**, in the third position (C), the second wing (21) completely closes off the second outlet channel (11).

4. Ventilation casing according to one of Claims 1 to 3, **characterized in that** the first outlet channel (10) comprises at least one internal end stop for the first wing (20) in the first position (A).

5. Ventilation casing according to one of Claims 1 to 4, **characterized in that** the second outlet channel (11) comprises at least one internal end stop for the second wing (21) in the third position (C).

6. Ventilation casing according to one of Claims 1 to 5, **characterized in that** the first outlet channel (10) comprises a portion of wall in the form of a cylinder of revolution coaxial with the axis of rotation (Δ) of the flap (15).

7. Ventilation casing according to one of Claims 1 to 6, **characterized in that** the second outlet channel (11) comprises a portion of wall in the form of a cylinder of revolution coaxial with the axis of rotation (Δ) of the flap (15).

8. Ventilation casing according to one of Claims 1 to 7, **characterized in that** the flap (15) comprises a longitudinal spindle (16) of axis Δ bearing at least two webs (17, 18) which extend radially and which bear, on two opposite edges, the first wing (20) and the second wing (21), respectively.

9. Ventilation casing according to Claim 8, **characterized in that** the two wings (20, 21) are situated on either side of the spindle (16).

10. Ventilation casing according to Claim 8 or 9, **characterized in that** the first wing (20) is closer to the longitudinal spindle than the second wing (21).

11. Ventilation casing according to one of Claims 8 to 10, **characterized in that** the longitudinal spindle has an outer wall in the form of a cylinder of revolution which is coaxial with the axis Δ and which is situated in the immediate vicinity of one edge of the first outlet channel (10) in the distributing zone (12).
